(19) Europäisches Patentamt
European Patent Office
Office européen des brevets

(11) **EP 4 628 228 A1**

(12) **EUROPEAN PATENT APPLICATION**
published in accordance with Art. 153(4) EPC

(43) Date of publication:
08.10.2025 Bulletin 2025/41

(21) Application number: 23897977.7

(22) Date of filing: 21.07.2023

(51) International Patent Classification (IPC):
*B21B 1/38* (2006.01)    *C21D 8/02* (2006.01)
*B21D 53/88* (2006.01)    *B21C 47/24* (2006.01)
*C22C 38/02* (2006.01)    *C22C 38/04* (2006.01)
*C22C 38/16* (2006.01)    *C22C 38/00* (2006.01)
*B21B 1/22* (2006.01)

(52) Cooperative Patent Classification (CPC):
**B21B 1/22; B21B 1/38; B21C 47/24; B21D 53/88;**
**C21D 8/02; C22C 38/00; C22C 38/02; C22C 38/04;**
**C22C 38/16;** Y02P 10/20

(86) International application number:
**PCT/KR2023/010562**

(87) International publication number:
**WO 2024/117441 (06.06.2024 Gazette 2024/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 01.12.2022  KR 20220165825

(71) Applicant: **Hyundai Steel Company**
**Incheon 22525 (KR)**

(72) Inventors:
• **KANG, Dong Hoon**
**Incheon 22525 (KR)**
• **HWANG, Sung Doo**
**Incheon 22525 (KR)**
• **KWON, Sun Hwan**
**Incheon 22525 (KR)**
• **LEE, Su Min**
**Incheon 22525 (KR)**

(74) Representative: **Viering, Jentschura & Partner**
**mbB**
**Patent- und Rechtsanwälte**
**Am Brauhaus 8**
**01099 Dresden (DE)**

(54) **HOT ROLLED STEEL SHEET, PART FOR VEHICLE, AND METHOD FOR MANUFACTURING SAME**

(57)    A method of producing a hot-rolled steel sheet according to an embodiment of the present invention includes producing molten metal using raw materials including pig iron produced in a blast furnace, direct reduced iron, and steel scrap, producing a semi-finished product, and producing a hot-rolled steel sheet.

FIG. 1

```
┌─────────────────────────────┐
│   PRODUCE MOLTEN METAL      │  S10
└─────────────────────────────┘
              ↓
┌─────────────────────────────┐
│ PRODUCE SEMI-FINISHED PRODUCT│  S20
└─────────────────────────────┘
              ↓
┌─────────────────────────────┐
│ PRODUCE HOT-ROLLED STEEL SHEET│ S30
└─────────────────────────────┘
```

EP 4 628 228 A1

**Description**

CROSS-REFERENCE TO RELATED APPLICATION

This application claims priority to and the benefit of Korean Patent Application No. 2022-0165825, filed on December 1, 2022, the disclosure of which is incorporated herein by reference in its entirety.

BACKGROUND

**1. Field of the Invention**

The present invention relates to a hot-rolled steel sheet, an automotive part, and a method of producing the same.

**2. Discussion of Related Art**

Generally, steelmaking methods include a blast furnace-converter process and an electric arc furnace (EAF) process.
The blast furnace-converter process involves producing pig iron by charging iron ore and bituminous coal (such as coke) into a blast furnace and melting them with hot air, and then producing molten steel by charging the pig iron produced in the blast furnace into a converter and removing impurities such as carbon, etc.
The EAF process involves producing molten steel by melting steel scrap in an EAF.
The molten steel produced by the above-described two methods is made into semi-finished products through continuous casting, and the semi-finished products are made into final products having dimensions suitable for customer needs through subsequent rolling.
Meanwhile, recently, the rapid climate change caused by greenhouse gas emissions in various industries has become a major international issue.
Carbon dioxide is a representative greenhouse gas. Among various industries, the steel industry is known as one of the industries with the highest proportion of carbon dioxide emissions.
For example, the blast furnace-converter process emits a large amount of carbon dioxide by using carbon monoxide (CO) produced by the combustion of coke as a reducing agent.
Accordingly, major steel companies are focusing on developing an EAF process that emits a relatively small amount of carbon dioxide compared to the blast furnace-converter process.
However, EAF steel products using steel scrap as the main raw material have the problem of containing a large amount of tramp elements. Tramp elements refer to impure alloy elements present in trace amounts in steel products.
Specifically, tramp elements are not easily dissolved in a base material, i.e., iron, and tend to accumulate at grain boundaries. Consequently, when the tramp element content exceeds permissible limits, cracks may be formed on the surface and inside during rolling. In addition, tramp elements may act as a major factor for hot embrittlement, significantly reducing ductility at high temperatures.
Therefore, EAF products generally have a limitation in application in high-grade steel such as automotive steel sheets that require high surface quality.

SUMMARY OF THE INVENTION

The present invention is directed to providing a hot-rolled steel sheet, an automotive part, and a method of producing the same, which are capable of reducing the amount of carbon dioxide generated in a blast furnace-converter process.
The present invention is also directed to providing a hot-rolled steel sheet, an automotive part, and a method of producing the same, which use an electric arc furnace and exhibit significantly superior physical properties compared to conventional electric arc furnace products.
The present invention is also directed to providing a hot-rolled steel sheet, an automotive part, and a method of producing the same, which have flexibility in raw material selection by minimizing the impact of fluctuations in the supply of specific raw materials.
The objectives of the present invention are not limited to those described above, and other objectives not mentioned can be clearly understood by those skilled in the art from the description below.
A method of producing a hot-rolled steel sheet according to an aspect of the present invention includes producing molten metal using raw materials including pig iron produced in a blast furnace, direct reduced iron, and steel scrap, producing a semi-finished product, and producing a hot-rolled steel sheet. Here, the raw materials include 20 wt% to 60 wt% of the pig iron, 10 wt% to 40 wt% of the direct reduced iron, and 20 wt% to 60 wt% of the steel scrap.

According to an embodiment of the present invention, the step of producing molten metal may include charging the raw materials into an electric arc furnace and melting the raw materials in the electric arc furnace.

According to an embodiment of the present invention, the hot-rolled steel sheet may have a copper content of 0.12 wt% or less (excluding 0).

According to an embodiment of the present invention, the pig iron may have a copper content of 0.03 wt% or less (excluding 0), the direct reduced iron may have a copper content of 0.02 wt% or less (excluding 0), and the steel scrap may have a copper content of 0.18 wt% or less (excluding 0).

According to an embodiment of the present invention, the hot-rolled steel sheet may have a tin content of 0.012 wt% or less (excluding 0).

According to an embodiment of the present invention, the pig iron may have a tin content of 0.003 wt% or less (excluding 0), the direct reduced iron may have a tin content of 0.002 wt% or less (excluding 0), and the steel scrap may have a tin content of 0.018 wt% or less (excluding 0).

According to an embodiment of the present invention, the production of a hot-rolled steel sheet may include reheating at a reheating temperature of 1150 °C to 1350 °C, hot rolling at a finishing delivery temperature of 880 °C to 930 °C, cooling at a cooling rate of 60 °C/sec to 110 °C/sec, and winding at a winding temperature of 380 °C to 480 °C.

A hot-rolled steel sheet according to another aspect of the present invention includes, in % by weight, 0.07 to 0.12% of carbon, 0.3 to 0.8% of silicon, 1.5 to 2.0% of manganese, 0.02% or less of phosphorus, 0.005% or less of sulfur, 0.12% or less of copper (excluding 0), 0.012% or less of tin (excluding 0), and the remainder as iron (Fe) and unavoidable impurities. Here, the hot-rolled steel sheet is produced by melting 20 wt% to 60 wt% of blast furnace-based pig iron, 20 wt% to 40 wt% of direct reduced iron, and 20 wt% to 60 wt% of steel scrap.

According to an embodiment of the present invention, the pig iron may have a copper content of 0.03 wt% or less (excluding 0), the direct reduced iron may have a copper content of 0.02 wt% or less (excluding 0), and the steel scrap may have a copper content of 0.18 wt% or less (excluding 0).

According to an embodiment of the present invention, the pig iron may have a tin content of 0.003 wt% or less (excluding 0), the direct reduced iron may have a tin content of 0.002 wt% or less (excluding 0), and the steel scrap may have a tin content of 0.018 wt% or less (excluding 0).

According to an embodiment of the present invention, the hot-rolled steel sheet may satisfy a coating weight of 1.8 to 3.0 $g/m^2$ and a crystal particle size of 2 to 10 $\mu$m when observing the surface after phosphate coating treatment.

According to an embodiment of the present invention, the hot-rolled steel sheet may further include one or more elements of chromium (Cr), niobium (Nb), titanium (Ti), and boron (B).

An automotive part according to still another aspect of the present invention includes, in % by weight, 0.07 to 0.12% of carbon, 0.3 to 0.8% of silicon, 1.5 to 2.0% of manganese, 0.02% or less of phosphorus, 0.005% or less of sulfur, 0.12% or less of copper (excluding 0), 0.012% or less of tin (excluding 0), and the remainder as iron (Fe) and unavoidable impurities. Here, a base material of the automotive part is produced by melting 20 wt% to 60 wt% of blast furnace-based pig iron, 20 wt% to 40 wt% of direct reduced iron, and 20 wt% to 60 wt% of steel scrap.

According to an embodiment of the present invention, the pig iron may have a copper content of 0.03 wt% or less (excluding 0), the direct reduced iron may have a copper content of 0.02 wt% or less (excluding 0), and the steel scrap may have a copper content of 0.18 wt% or less (excluding 0).

According to an embodiment of the present invention, the pig iron may have a tin content of 0.003 wt% or less (excluding 0), the direct reduced iron may have a tin content of 0.002 wt% or less (excluding 0), and the steel scrap may have a tin content of 0.018 wt% or less (excluding 0).

According to an embodiment of the present invention, the automotive part may satisfy a coating weight of 1.8 to 3.0 $g/m^2$ and a crystal particle size of 2 to 10 $\mu$m when observing the surface after phosphate coating treatment.

According to an embodiment of the present invention, the automotive part may be an automotive lower arm.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 is a flowchart showing a method of producing a hot-rolled steel sheet according to an embodiment of the present invention;
FIG. 2 is a flowchart showing in detail the step of producing molten metal in the flowchart of FIG. 1;
FIG. 3 is a set of photographs showing the bending test evaluation results of Comparative Example 3 and Example 6 described in Table 2;
FIG. 4 is a set of photographs showing the pretreatment characteristics evaluation results of Comparative Example 3 and Example 6 described in Table 2;

FIG. 5 is diagrams describing a method of evaluating adhesion in the coatability evaluation described in Table 2;

FIG. 6 is a photograph showing the appearance of Example 6 after the impact resistance evaluation described in Table 2;

FIG. 7 is a set of photographs showing the appearance of Comparative Example 1, Comparative Example 3, and Example 6 after the weldability evaluation described in Table 2; and

FIG. 8 is a photograph showing the appearance of Example 6 after the wire processability evaluation described in Table 3.

DETAILED DESCRIPTION OF EXEMPLARY EMBODIMENTS

All terms (including technical and scientific terms) used herein have the same meaning as generally understood by those skilled in the art to which the present invention pertains.

Terms that are defined in commonly used dictionaries should be interpreted as having meanings consistent with the context of the relevant technology, and are explicitly defined herein unless they are interpreted in an idealized or overly formal sense.

Terms such as "first," "second," and "third" are used to describe various components, regions, portions, or layers, which are not limited by these terms. These terms are used solely for the purpose of distinguishing one component, region, portion, or layer from another.

In this specification, when a part is said to be "on" another part, it is not limited to the case in which it is directly on the other part, but also includes the case in which another part is present therebetween.

In this specification, the inclusion of additional elements means that the additional element is included in place of the remaining iron (Fe), and unless specifically stated, % refers to wt%.

Hereinafter, embodiments of the present invention will be described in detail with reference to the drawings.

Components of hot-rolled steel sheet according to embodiment of the present invention

A hot-rolled steel sheet according to an embodiment of the present invention includes iron (Fe), carbon (C), silicon (Si), manganese (Mn), phosphorus (P), sulfur (S), copper (Cu), and tin (Sn).

The hot-rolled steel sheet according to an embodiment of the present invention may further include one or more of aluminum (Al), chromium (Cr), niobium (Nb), titanium (Ti), boron (B), and nitrogen (N).

For example, the hot-rolled steel sheet according to an embodiment may include, in % by weight, 0.07 to 0.12 of carbon (C), 0.3 to 0.8 of silicon (Si), 1.5 to 2.0 of manganese (Mn), 0.02 or less of phosphorus (P), 0.005 or less of sulfur (S), 0.2 to 0.5 of aluminum (Al), less than 0.1 (excluding 0) of copper (Cu), less than 0.01 (excluding 0) of tin (Sn), 0.5 to 1.1 of chromium (Cr), 0.05 to 0.1 of niobium (Nb), 0.06 to 1.1 of titanium (Ti), 0.001 to 0.0035 of boron (B), 0.006 or less of nitrogen (N), and the remainder as iron (Fe) and other unavoidable impurities.

Hereinafter, the components and component contents of the hot-rolled steel sheet will be described.

[Carbon (C): 0.07 wt% or more and 0.12 wt% or less]

Carbon (C) is an essential element for securing the required strength. For example, carbon (C) may be added to secure the strength of a bainite microstructure. Also, carbon (C) may be added to secure the balance of precipitates.

However, when the amount of carbon (C) added is excessive, the processability and weldability of the steel sheet may be degraded. On the other hand, when the amount of carbon (C) added is insufficient, the above-described addition effect may be insignificant.

Therefore, in an embodiment of the present invention, the content of carbon (C) may be 0.07 wt% to 0.12 wt%.

According to an embodiment of the present invention, the content of carbon (C) may be about 0.07 wt% to 0.12 wt%, and preferably, about 0.09 wt% to 0.10 wt%.

[Silicon (Si): 0.3 wt% or more and 0.8 wt% or less]

Silicon (Si) is a solid solution strengthening element. For example, silicon (Si) is a ferrite stabilizing element that is dissolved in ferrite, and can increase strength without deteriorating ductility. Silicon (Si) can improve the elongation of the steel sheet by suppressing the formation of carbides.

However, when the amount of silicon (Si) added is excessive, surface defects caused by oxide scale may occur on the surface of the hot-rolled steel sheet, and weldability may be degraded. On the other hand, when the amount of silicon (Si) added is insufficient, the above-described addition effect may be insignificant.

Therefore, in an embodiment of the present invention, the content of silicon may be 0.3 wt% to 0.8 wt%. According to an embodiment of the present invention, the content of silicon may be about 0.3 wt% to 0.8 wt%.

[Manganese (Mn): 1.5 wt% or more and 2.0 wt% or less]

Manganese improves the strength of steel by improving solid solution strengthening and hardenability. Manganese is an essential component for suppressing perlite transformation and obtaining a bainite microstructure.

However, when the amount of manganese (Mn) added is excessive, processability may deteriorate, and weldability may be degraded. On the other hand, when the amount of manganese (Mn) added is insufficient, the above-described addition effect may be insignificant.

Therefore, in an embodiment of the present invention, the content of manganese (Mn) may be 1.5 wt% to 2.0 wt%. According to an embodiment of the present invention, the content of manganese (Mn) may be about 1.5 wt% to 2.0 wt%.

[Sulfur (S): 0.005 wt% or less]

Sulfur (S) may degrade toughness and weldability and increase non-metallic inclusions (sulfur compounds) during hot rolling, thereby degrading the processability of steel. Therefore, in an embodiment of the present invention, the content of sulfur (S) may be 0.005 wt% or less. According to an embodiment of the present invention, the content of sulfur (S) may be about 0.005 wt% or less.

[Phosphorus (P): 0.02 wt% or less]

Phosphorus (P) is an impure element that promotes grain boundary segregation and high-temperature cracking. Therefore, in an embodiment of the present invention, the content of phosphorus (P) may be 0.02 wt% or less. According to an embodiment of the present invention, the content of phosphorus (P) may be about 0.02 wt% or less.

[Aluminum (Al): 0.02 wt% or more and 0.5 wt% or less]

Aluminum (Al) is a representative deoxidizer. Aluminum (Al) is input into a converter before or during tapping to suppress the generation of pinholes or non-metallic inclusions. Aluminum (Al) combines with nitrogen in steel to form a nitride (AlN).

The nitride AlN is effective in grain refinement of steel by being precipitated at the grain boundary, and thus can improve the toughness of steel.

In addition, AlN may prevent cracks during slab production by effectively preventing high-temperature oxidation.

However, when the amount of aluminum (Al) added is excessive, defects may occur due to the formation of inclusions. On the other hand, when the amount of aluminum (Al) added is insufficient, the above-described addition effect may be insignificant.

Therefore, in an embodiment of the present invention, the content of aluminum (Al) may be 0.02 wt% to 0.5 wt%. According to an embodiment of the present invention, the content of aluminum (Al) may be about 0.02 wt% to 0.5 wt%.

[Copper (Cu): 0.12 wt% or less (excluding 0) / tin (Sn): 0.012 wt% or less (excluding 0)]

Copper (Cu) and tin (Sn) may be incorporated from steel scrap. Copper (Cu) and tin (Sn) are elements that are hardly removed in the steelmaking process, and are considered tramp elements. The tramp element may cause surface and internal cracks during rolling. Also, the tramp element may act as a major factor for high-temperature brittleness, thereby significantly decreasing ductility at high temperature.

Particularly, when a phosphate film is formed on the steel, tin (Sn) degrades the size uniformity and stable adhesion amount of phosphate.

Therefore, in an embodiment of the present invention, the contents of copper (Cu) and tin (Sn) may be 0.12 wt% or less (excluding 0) and 0.012 wt% or less (excluding 0), respectively. According to an embodiment of the present invention, the contents of copper (Cu) and tin (Sn) may be about 0.12 wt% or less (excluding 0) and about 0.012 wt% or less (excluding 0), respectively.

[Chromium (Cr): 0.5 wt% or more and 1.1 wt% or less]

Chromium (Cr) is a solid solution strengthening element. Chromium (Cr) may help form martensite and bainite by delaying ferrite transformation.

However, when the amount of chromium (Cr) added is excessive, a microstructure is not uniform, and thus processability may be degraded. On the other hand, when the amount of chromium (Cr) added is insufficient, the above-described addition effect may be insignificant.

Therefore, in an embodiment of the present invention, the content of chromium (Cr) may be 0.5 wt% to 1.1 wt%.

According to an embodiment of the present invention, the content of chromium (Cr) may be about 0.5 wt% to 1.1 wt%.

[Niobium (Nb): 0.05 wt% or more and 0.1 wt% or less]

Niobium (Nb) is effective in improving strength and impact toughness by refining grains.

However, when the amount of niobium (Nb) added is excessive, recrystallization is excessively delayed, and thus precipitates may become coarse, thereby degrading processability. On the other hand, when the amount of niobium (Nb) added is insufficient, the above-described addition effect may be insignificant.

Therefore, in an embodiment of the present invention, the content of niobium (Nb) may be 0.05 wt% to 0.1 wt%. According to an embodiment of the present invention, the content of niobium (Nb) may be about 0.05 wt% to 0.1 wt%.

[Titanium (Ti): 0.06 wt% or more and 1.1 wt% or less]

Titanium (Ti) combines with nitrogen in steel to form a nitride (TiN), and thus may suppress the growth of grains and the production of free nitrogen. However, when the amount of titanium (Ti) added is excessive, precipitates are excessively formed, and thus impact toughness may be degraded. On the other hand, when the amount of titanium (Ti) added is insufficient, the above-described addition effect may be insignificant.

Therefore, in an embodiment of the present invention, the content of titanium (Ti) may be 0.06 wt% to 1.1 wt%. According to an embodiment of the present invention, the content of titanium (Ti) may be about 0.06 wt% to 1.1 wt%.

[Boron (B): 0.001 wt% or more and 0.0035 wt% or less]

Boron (B) improves strength by suppressing ferrite transformation. However, when the amount of boron (B) added is excessive, weldability and processability may be degraded. On the other hand, when the amount of boron (B) added is insufficient, the above-described addition effect may be insignificant.

Therefore, in an embodiment of the present invention, the content of boron (B) may be 0.001 wt% to 0.0035 wt%. According to an embodiment of the present invention, the content of boron (B) may be about 0.001 wt% to 0.0035 wt%.

[Nitrogen (N): 0.006 wt% or less]

Nitrogen (N) may greatly affect the mechanical properties of steel even with a trace amount. For example, nitrogen (N) may degrade elongation while increasing tensile strength and yield strength. Also, free nitrogen may cause strain aging.

Therefore, in an embodiment of the present invention, the content of nitrogen (N) may be 0.006 wt% or less. According to an embodiment of the present invention, the content of nitrogen (N) may be about 0.006 wt% or less.

The remainder includes iron (Fe) and unavoidable impurities. Unavoidable impurities are impurities incorporated in the process of producing a hot-rolled steel sheet, and since they are widely known in the field, a detailed description is omitted.

In an embodiment of the present invention, the addition of elements other than the above-described alloy components is not excluded, and various elements may be included without departing from the technical spirit of the present invention. When an additional element is included, it replaces the remaining Fe.

As described above, the components and component contents of the steel sheet according to an embodiment have been examined. In addition to the embodiments described above, it will be apparent to those skilled in the art that the present invention may be embodied in other specific forms without departing from the spirit or scope of the present invention.

Method of producing hot-rolled steel sheet

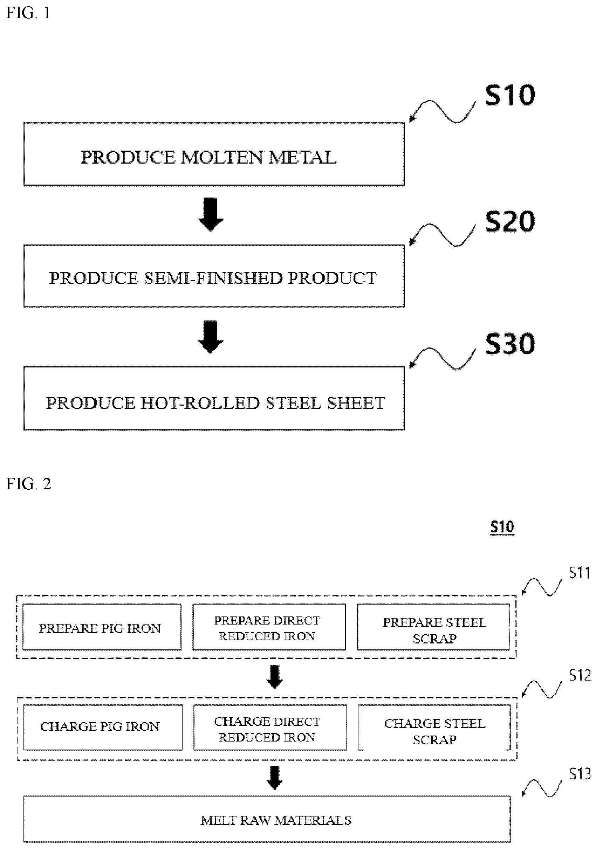

FIG. 1 is a flowchart showing a method of producing steel according to an embodiment of the present invention.

Referring to FIG. 1, the method of producing steel includes producing molten metal (S10), producing a semi-finished product (S20), and producing a hot-rolled steel sheet (S30).

The step of producing molten metal (S10) is for melting raw materials to produce molten steel. The raw materials may include an ore-based material and steel scrap.

The ore-based material may include pig iron and direct reduced iron. Pig iron may be produced by charging iron ore and coke into a blast furnace and blowing hot air to reduce and melt the iron ore.

Direct reduced iron may be produced by reducing solid-phase iron ore using reducing gases (carbon monoxide, hydrogen, etc.). For example, the direct reduced iron may be direct reduced iron (DRI) or hot briquetted iron (HBI). The direct reduced iron may be processed into a pellet form.

However, the type and processed form of direct reduced iron are not limited to those described above.

Steel scrap may be obtained from a steelmaking process or unusable steel products.

Meanwhile, pig iron is suitable for producing high-quality steel products because it has a small content of impurities, but there is a problem in that a large amount of carbon dioxide is emitted during the process of producing pig iron. For example, the amount of carbon dioxide emitted when producing one ton of pig iron is about two tons.

Electric arc furnace (EAF) molten steel is produced by melting steel scrap in an EAF. In the process of producing EAF molten steel, a smaller amount of carbon dioxide is emitted compared to a blast furnace process. For example, the emission amount of carbon dioxide from producing molten steel is one fourth of that from producing pig iron.

However, since steel products produced from EAF molten steel have a large content of impurities such as tramp elements, it is difficult to satisfy physical properties that high-quality steel products such as automotive parts require.

In order to solve the above-described problem, the step of producing molten metal (S10) according to an embodiment of the present invention is performed by charging ore-based materials, such as pig iron and direct reduced iron, and steel scrap into an electric arc furnace and melting them.

FIG. 2 is a flowchart showing in detail the step of producing molten metal in the flowchart of FIG. 1.

Referring to FIG. 2, the step of producing molten metal (S10) may include preparing raw materials (S11), charging the raw materials (S12), and melting the raw materials (S13).

In the step of preparing raw materials (S11), pig iron, direct reduced iron, and steel scrap are prepared according to a predetermined content ratio.

Specifically, the content of pig iron is defined as X, the content of direct reduced iron is defined as Y, and the content of steel scrap is defined as Z. Additionally, the maximum copper (Cu) content and the maximum tin (Sn) content in the hot-rolled steel sheet produced in the hot rolling step described below are defined as K1 and K2, respectively. Each content is based on weight percent (wt%). X + Y + Z may equal 100.

According to an embodiment of the present invention, X, Y, Z, K1, and K2 satisfy Equations 1 to 4 below.

[Equation 1]

$$(a1 \times X + a2 \times Y + a3 \times Z)/(X + Y + Z) = K1$$

[Equation 2]

$$K1 \leq 0.12$$

[Equation 3]

$$(b1 \times X + b2 \times Y + b3 \times Z)/(X + Y + Z) = K2$$

[Equation 4]

$$K2 \leq 0.012$$

In Equation 1, a1, a2, and a3 represent the copper content of the pig iron, the copper content of the direct reduced iron, and the copper content of the steel scrap, respectively.

In Equation 3, b1, b2, and b3 represent the tin content of the pig iron, the tin content of the direct reduced iron, and the tin content of the steel scrap, respectively.

The copper content (a1) of the pig iron may be 0.03 wt% or less (excluding 0). The copper content (a2) of the direct reduced iron may be 0.02 wt% or less (excluding 0). The copper content (a3) of the steel scrap may be 0.18 wt% or less (excluding 0).

According to an embodiment of the present invention, the copper content (a1) of the pig iron may be about 0.03 wt% or less (excluding 0). The copper content (a2) of the direct reduced iron may be about 0.02 wt% or less (excluding 0). The copper content (a3) of the steel scrap may be about 0.18 wt% or less (excluding 0).

The tin content (b2) of the direct reduced iron may be 0.002 wt% or less (excluding 0). The tin content (b3) of the steel scrap may be 0.018 wt% or less (excluding 0). The tin content (b1) of the pig iron may be 0.003 wt% or less (excluding 0).

According to an embodiment of the present invention, the tin content (b2) of the direct reduced iron may be about 0.002 wt% or less (excluding 0). The tin content (b3) of the steel scrap may be about 0.018 wt% or less (excluding 0). The tin content (b1) of the pig iron may be about 0.003 wt% or less (excluding 0).

However, the copper content (a1, a2, a3) and tin content (b1, b2, b3) may increase or decrease within a predetermined range depending on the raw material quality, processing degree, etc. of each raw material.

According to an embodiment of the present invention, when the pig iron content (X) exceeds the preset range, the effect of reducing carbon dioxide emissions may be insufficient. On the other hand, when the pig iron content (X) is below the preset range, insufficient heat sources may hinder the proper melting of other raw materials (i.e., steel scrap and direct reduced iron).

Therefore, in an embodiment of the present invention, the pig iron content (X) may be 20 wt% to 60 wt%. According to an embodiment of the present invention, the pig iron content (X) may be about 20 wt% to 60 wt%.

According to an embodiment of the present invention, when the direct reduced iron content (Y) exceeds the preset range, the increased slag volume in the molten metal necessitates higher operating temperatures in the electric arc furnace, thereby reducing energy efficiency. This leads to reduced refining capacity, requiring additional adjustments to slag making during the dephosphorization process.

On the other hand, when the direct reduced iron content (Y) is below the preset range, the proportion of pig iron or steel scrap needs to be increased to maintain compositional balance. For example, when the pig iron content is increased to compensate for decreased direct reduced iron content, the effect of reducing carbon dioxide emissions may be insufficient. When the steel scrap content is increased to compensate for decreased direct reduced iron content, the content of the tramp elements (i.e., copper and tin) may increase.

Therefore, in an embodiment of the present invention, the direct reduced iron content (Y) may be 10 wt% to 40 wt%. According to an embodiment of the present invention, the direct reduced iron content (Y) may be about 10 wt% to 40 wt%.

According to an embodiment of the present invention, when the steel scrap content (Z) exceeds the preset range, the content of tramp elements may increase, the target physical properties of the final steel product are not met. On the other hand, when the steel scrap content (Z) is below the preset range, the effect of reducing carbon dioxide emissions may be insufficient.

Therefore, in an embodiment of the present invention, the steel scrap content may be 20 to 60 wt%. According to an embodiment of the present invention, the steel scrap content may be about 20 to 60 wt%.

In the step of charging the raw materials (S12), pig iron, direct reduced iron, and steel scrap are charged into a melting furnace. The charging of each raw material may be performed sequentially or simultaneously.

Furthermore, the charging of each raw material may be performed multiple times to prevent slag overflow or to ensure appropriate melting reactions.

The step of melting the raw materials (S13) may be performed in an electric arc furnace (EAF). In the present embodiment, the EAF may be an alternating current (AC) electric arc furnace. However, it is not limited thereto, and a direct current (DC) electric arc furnace may also be applied.

In the step of producing a semi-finished product (S20), semi-finished products such as slabs, blooms, and billets are manufactured using the molten metal produced in step (S10).

For example, step (S20) may be performed by a continuous casting process. The continuous casting process is a process in which casting and rolling are performed simultaneously by passing the molten metal through a plurality of segments arranged in series, thereby producing semi-finished products with a predetermined width and thickness.

However, step (S20) is not limited to the above-described process. For instance, step (S20) may include a forging process following the continuous casting process. Specifically, after producing blooms in the continuous casting process, it is also possible to produce forged slabs with predetermined dimensions through a subsequent forging process.

In the step of producing a hot-rolled steel sheet (S30), the semi-finished product is reheated and then rolled into a hot-rolled steel sheet with a predetermined thickness and width. For example, the thickness of the hot-rolled steel sheet may be 2 to 5 mm. However, the thickness of the hot-rolled steel sheet is not limited thereto.

Specifically, the step of producing the hot-rolled steel sheet (S30) includes a reheating step (S31), a hot rolling step (S32), a cooling step (S33), and a winding step (S34).

In the reheating step (S31), the semi-finished product is reheated within a predetermined temperature range. The reheating step (S31) may redissolve segregated elements formed in step (S20).

When the reheating temperature (RT) is below the preset temperature range, the redissolution efficiency of segregated components decreases, and the bend formability of the final product may deteriorate. On the other hand, when the reheating temperature exceeds the preset range, precipitates may become coarse, and the surface quality of the hot-rolled steel sheet may be degraded.

Therefore, the present invention limits the reheating temperature to 1150 °C to 1350 °C. In an embodiment of the present invention, the reheating temperature is limited to approximately 1150 °C to 1350 °C.

In the hot rolling step (S32), the reheated semi-finished product is hot-rolled. When the finishing delivery temperature (FDT) in step (S32) is below the preset range, issues such as mixed microstructures due to abnormal rolling may occur. On the other hand, when the FDT exceeds the preset range, the grain structure of the hot-rolled steel sheet may become coarse, causing the physical properties of the final product to be degraded.

Therefore, in the present embodiment, the FDT is limited to 880 °C to 930 °C. According to an embodiment of the present invention, the FDT is limited to approximately 880 °C to 930 °C.

In the cooling step (S33), the hot-rolled steel sheet is cooled. When the cooling rate in step (S33) is below the preset range, a ferrite microstructure may be formed instead of a bainite microstructure. On the other hand, when the cooling rate exceeds the preset range, martensite transformation may dominate over bainite transformation, deteriorating the processability of the steel sheet.

Therefore, in the present embodiment, the cooling rate is limited to 60 °C/sec to 110 °C/sec. According to an embodiment of the present invention, the cooling rate is limited to approximately 60 °C/sec to 110 °C/sec.

In the winding step (S34), the cooled hot-rolled steel sheet is wound into a coil form. When the winding temperature in step (S34) is below the preset range, winding may become difficult. On the other hand, when the winding temperature exceeds the preset range, surface scale may be formed inside the hot-rolled steel sheet.

Therefore, in the present embodiment, the winding temperature is limited to 380 °C to 480 °C. According to an embodiment of the present invention, the winding temperature is limited to approximately 380 °C to 480 °C.

As a result, according to an embodiment of the present invention, the amount of pig iron used is significantly reduced compared to a conventional blast furnace-converter process, thereby significantly reducing the amount of carbon dioxide generated during steel product production.

According to an embodiment of the present invention, an electric arc furnace product with excellent physical properties may be produced by controlling the content of tramp elements to within a permissible range compared to conventional electric arc furnace products.

According to an embodiment of the present invention, the content ratio of pig iron, direct reduced iron, and steel scrap may be adjusted within a predetermined range, thereby ensuring flexible adaptation even when supply chain disruptions occur for specific raw materials.

Characteristics of hot-rolled steel sheet according to the present invention

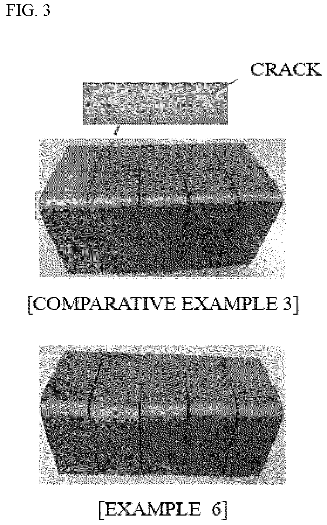

Hereinafter, the examples and comparative examples of the present invention will be compared through Tables 1 and 2. FIGS. 3 to 8 are diagrams illustrating the evaluation results of Table 2.

Table 1 below shows Examples 1 to 6 which are experimental examples satisfying the raw material content ranges according to the embodiments of the present invention and Comparative Examples 1 to 4 which are experimental examples deviating from these content ranges.

The examples and comparative examples differ only in the content of the raw materials (pig iron, direct reduced iron, and steel scrap), while all other conditions (such as process parameters) are identical.

Specifically, the hot-rolled steel sheets according to the examples and comparative examples are produced through the following process.

First, according to the content ranges described in Table 1, the raw materials are charged into an electric arc furnace and melted to produce molten steel. Afterward, the molten steel is processed through a continuous casting process to manufacture semi-finished products with predetermined specifications, and these semi-finished products are then rolled using hot rolling equipment to produce hot-rolled steel sheets with a thickness of 3.2 mm.

[Table 1]

| Classification | Pig iron X (wt%) | Direct reduced iron Y (wt%) | Steel scrap Z (wt%) | K1 | K2 |
|---|---|---|---|---|---|
| Example 1 | 60 | 20 | 20 | 0.06 | 0.006 |
| Example 2 | 50 | 20 | 30 | 0.08 | 0.008 |
| Example 3 | 30 | 30 | 40 | 0.09 | 0.009 |
| Example 4 | 20 | 40 | 40 | 0.09 | 0.009 |
| Example 5 | 30 | 20 | 50 | 0.1 | 0.01 |
| Example 6 | 30 | 10 | 60 | 0.12 | 0.012 |
| Comparative Example 1 | 10 | 0 | 90 | 0.17 | 0.017 |
| Comparative Example 2 | 10 | 10 | 80 | 0.16 | 0.016 |
| Comparative Example 3 | 20 | 10 | 70 | 0.13 | 0.013 |
| Comparative Example 4 | 10 | 20 | 70 | 0.13 | 0.013 |

As shown in Table 1, the maximum copper contents (K1) of the hot-rolled steel sheets according to Examples 1 to 6 were 0.12 or less, whereas those of Comparative Examples 1 to 4 were 0.12 or more.

In addition, the maximum tin contents (K2) of the hot-rolled steel sheets according to Examples 1 to 6 were 0.012 or less, whereas those of Comparative Examples 1 to 4 were 0.012 or more.

Table 2 below shows the product characteristics of the hot-rolled steel sheets according to Examples 1 to 6 and Comparative Examples 1 to 4 listed in Table 1.

In Table 2, the bending test conditions were set at R/T=0.94 and 1.5. Here, R represents the jig diameter (units: mm) in the bending test, and T represents the thickness (units: mm) of the tested steel sheet.

The pretreatment characteristics in Table 2 were evaluated by applying a zinc phosphate coating to the hot-rolled steel sheet surface and assessing the appearance, coating weight, and crystal particle size. For pretreatment evaluation, the optimal ranges of coating weight and crystal particle size were 1.8 to 3.0 g/m$^2$ and 2 to 10 $\mu$m, respectively.

In Table 2, the adhesion in the coatability evaluation was determined by the percentage of coating area detached after a tape test on the coated surface of the hot-rolled steel sheet.

In Table 2, the impact resistance in the coatability evaluation was evaluated by dropping a 500 g weight from a 50 cm height onto the coated surface and inspecting for defects.

In Table 2, weldability was evaluated based on the deposited metal (i.e., bead) formed along the welding line at a wire feed rate of 6 to 11 m/min.

[Table 2]

| Classification | Bending test evaluation | Pretreatment characteristic evaluation | Coatability evaluation | | Weldability |
|---|---|---|---|---|---|
| | | | Adhesion | Impact resistance | |
| Example 1 | Good | Good | M-1 | Good | Good |
| Example 2 | Good | Good | M-1 | Good | Good |
| Example 3 | Good | Good | M-1 | Good | Good |
| Example 4 | Good | Good | M-1 | Good | Good |
| Example 5 | Good | Good | M-1 | Good | Good |
| Example 6 | Good | Good | M-1 | Good | Good |
| Comparative Example 1 | Poor | Poor | M-3 | Crack | Lack of weld metal deposition |
| Comparative Example 2 | Poor | Poor | M-3 | Crack | Lack of weld metal deposition |
| Comparative Example 3 | Good | Poor | M-2 | Crack | Burn through |
| Comparative Example 4 | Good | Poor | M-2 | Crack | Burn through |

[Bending test evaluation results]

As shown in Table 2 and FIG. 3, the hot-rolled steel sheets of Examples 1 to 6 and Comparative Examples 3 and 4 exhibited "good" performance in the bending test. In contrast, the hot-rolled steel sheets of Comparative Examples 1 and 2 showed micro-cracks during the bending test, resulting in "poor" performance.

Referring to the bending test results, when the maximum copper content (K1) and the maximum tin content (K2) were 0.16 or more and 0.016 or more, respectively, the bending properties significantly deteriorated.

[Pretreatment characteristic evaluation results]

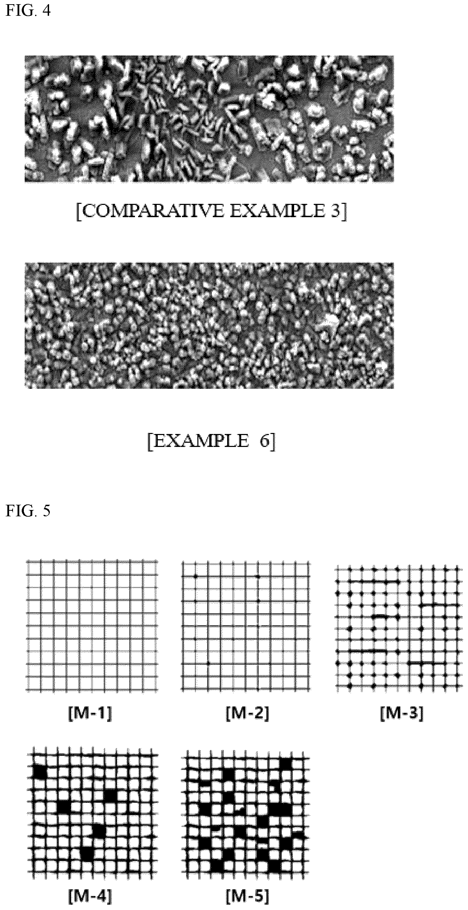

As shown in Table 2 and FIG. 4, the hot-rolled steel sheets of Examples 1 to 6 exhibited "good" performance in the pretreatment characteristic evaluation. In contrast, the hot-rolled steel sheets of Comparative Examples 1 to 4 exhibited "poor" performance in the pretreatment characteristic evaluation.

Referring to the pretreatment characteristic evaluation results, when the maximum copper content (K1) and the maximum tin content (K2) were 0.13 or more and 0.013 or more, respectively, the crystal particle size of the coating formed on the surface of the hot-rolled steel sheet became uneven.

[Adhesion in coatability evaluation]

As shown in Table 2 and FIG. 5, the hot-rolled steel sheets of Examples 1 to 6 exhibited an M-1 grade (good) in the adhesion evaluation. In contrast, the hot-rolled steel sheets of Comparative Examples 1 to 4 exhibited M-3 (poor) or M-2 (poor) grades in the adhesion evaluation.

According to the adhesion test results, when the maximum copper content (K1) and the maximum tin content (K2) were 0.13 or more and 0.013 or more, respectively, a significant decrease in bonding strength between the hot-rolled steel sheet and coating surface was observed.

[Impact resistance in coatability evaluation]

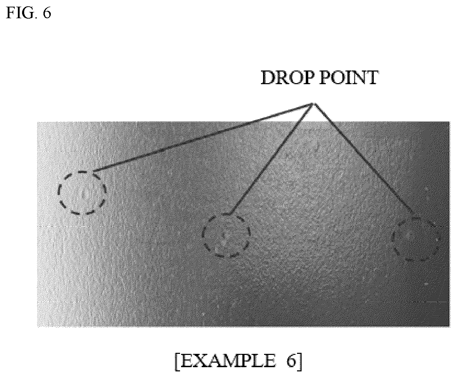

As shown in Table 2 and FIG. 6, the hot-rolled steel sheets of Examples 1 to 6 exhibited "good" performance in the impact resistance evaluation, whereas the hot-rolled steel sheets of Comparative Examples 1 to 4 showed "poor" performance.

According to the adhesion test results, when the maximum copper content (K1) and the maximum tin content (K2) were 0.13 or more and 0.013 or more, respectively, the impact resistance of the coated surface on the hot-rolled steel sheet significantly deteriorated.

[Weldability evaluation]

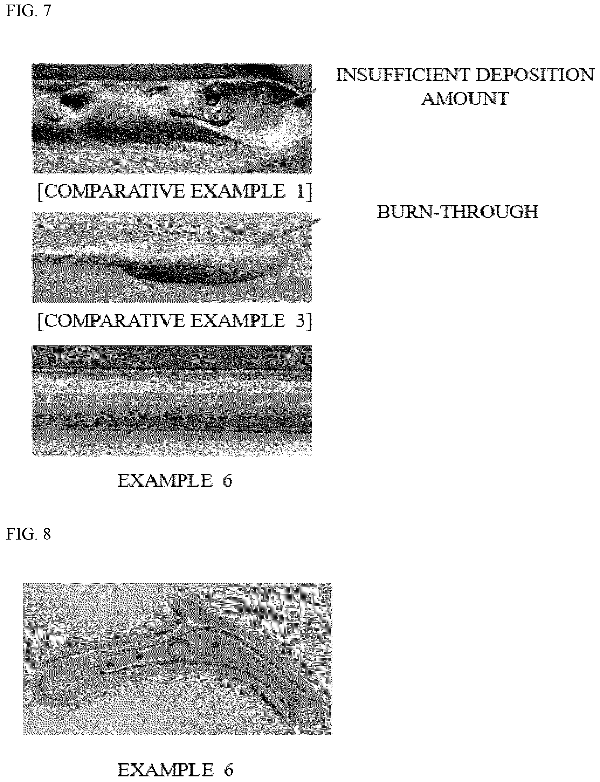

As shown in Table 2 and FIG. 7, the hot-rolled steel sheets of Examples 1 to 6 exhibited "good" performance, whereas the hot-rolled steel sheets of Comparative Examples 1 to 4 showed insufficient weld metal deposition or burn-through.

According to the weldability evaluation results, when the maximum copper content (K1) and the maximum tin content (K2) were 0.16 or more and 0.016 or more, respectively, a significant decrease in weldability of the hot-rolled steel sheet was observed.

In conclusion, the hot-rolled steel sheets of Examples in the present invention demonstrated excellent performance in all of the bending test, pretreatment characteristic evaluation, coatability evaluation, and weldability evaluation, while the hot-rolled steel sheets of Comparative Examples exhibited defects in at least one of these evaluation categories.

<u>Automotive part according to the present invention</u>

The automotive part according to the present invention is manufactured using the hot-rolled steel sheet of the embodiments of the present invention. For example, the automotive part may be a lower arm. However, the type of automotive part is not limited thereto, and the hot-rolled steel sheet may also be used to produce commercial vehicle frames, specialty vehicle parts, and passenger car parts.

Table 3 shows the punch formability and wire processability evaluations of lower arms manufactured by processing the hot-rolled steel sheets of Examples 1 to 6 and Comparative Examples 1 to 4 listed in Table 1. FIG. 8 is a diagram illustrating the evaluation results of Table 3.

[Table 3]

| Classification | Punch formability evaluation | Wire processability evaluation |
|---|---|---|
| Example 1 | Good | Good |
| Example 2 | Good | Good |
| Example 3 | Good | Good |
| Example 4 | Good | Good |
| Example 5 | Good | Good |
| Example 6 | Good | Good |
| Comparative Example 1 | Poor | Poor |
| Comparative Example 2 | Poor | Poor |
| Comparative Example 3 | Good | Good |

(continued)

| Classification | Punch formability evaluation | Wire processability evaluation |
|---|---|---|
| Comparative Example 4 | Good | Good |

As shown in Table 3 and FIG. 8, the lower arms of Examples 1 to 6 and Comparative Examples 3 and 4 exhibited "good" performance in both punch formability and wire processability evaluations. However, the lower arms of Comparative Examples 1 and 2 showed "poor" performance in these evaluations.

The reason for this is considered to be that the contents of copper and tin in the hot-rolled steel sheets exceeded 0.13 and 0.013, respectively, thereby deteriorating the processability of the parts.

According to an embodiment of the present invention, it is possible to significantly reduce the amount of carbon dioxide generated during steel product production by remarkably reducing the amount of pig iron used compared to a conventional blast furnace-converter process.

According to an embodiment of the present invention, it is possible to produce an electric arc furnace product with excellent physical properties by controlling the content of tramp elements to within a permissible range compared to a conventional electric arc furnace product.

According to an embodiment of the present invention, the content ratio of pig iron, direct reduced iron, and steel scrap can be adjusted within a predetermined range, thereby ensuring flexible adaptation even when supply chain disruptions occur for specific raw materials.

As described above, preferred embodiments of the present invention have been described, and it is apparent to those skilled in the art that the present invention may be embodied in other specific forms without departing from the spirit or scope of the present invention, in addition to the embodiments described above.

In other words, the above-described embodiments should be considered as illustrative rather than restrictive, and accordingly, the present invention is not limited to the above description and may be modified within the scope of the appended claims and their equivalents.

**Claims**

1. A method of producing a hot-rolled steel sheet, comprising:

   producing molten metal using raw materials including pig iron produced in a blast furnace, direct reduced iron, and steel scrap;
   producing a semi-finished product; and
   producing a hot-rolled steel sheet,
   wherein the raw materials include 20 wt% to 60 wt% of the pig iron, 10 wt% to 40 wt% of the direct reduced iron, and 20 wt% to 60 wt% of the steel scrap.

2. The method of claim 1, wherein the step of producing molten metal includes:

   charging the raw materials into an electric arc furnace; and
   melting the raw materials in the electric arc furnace.

3. The method of claim 1, wherein the hot-rolled steel sheet has a copper content of 0.12 wt% or less (excluding 0).

4. The method of claim 3, wherein the pig iron has a copper content of 0.03 wt% or less (excluding 0),

   the direct reduced iron has a copper content of 0.02 wt% or less (excluding 0), and
   the steel scrap has a copper content of 0.18 wt% or less (excluding 0).

5. The method of claim 1, wherein the hot-rolled steel sheet has a tin content of 0.012 wt% or less (excluding 0).

6. The method of claim 5, wherein the pig iron has a tin content of 0.003 wt% or less (excluding 0),

   the direct reduced iron has a tin content of 0.002 wt% or less (excluding 0), and
   the steel scrap has a tin content of 0.018 wt% or less (excluding 0).

7. The method of claim 1, wherein the step of producing a hot-rolled steel sheet includes:

   reheating at a reheating temperature of 1150 °C to 1350 °C;
   hot rolling at a finishing delivery temperature of 880 °C to 930 °C;
   cooling at a cooling rate of 60 °C/sec to 110 °C/sec; and
   winding at a winding temperature of 380 °C to 480 °C.

8. A hot-rolled steel sheet comprising, in % by weight, 0.07 to 0.12% of carbon, 0.3 to 0.8% of silicon, 1.5 to 2.0% of manganese, 0.02% or less of phosphorus, 0.005% or less of sulfur, 0.12% or less (excluding 0) of copper, 0.012% or less (excluding 0) of tin, and the remainder as iron (Fe) and unavoidable impurities,
   wherein the hot-rolled steel sheet is produced by melting 20 wt% to 60 wt% of blast furnace-based pig iron, 20 wt% to 40 wt% of direct reduced iron, and 20 wt% to 60 wt% of steel scrap.

9. The hot-rolled steel sheet of claim 8, wherein the pig iron has a copper content of 0.03 wt% or less (excluding 0),

   the direct reduced iron has a copper content of 0.02 wt% or less (excluding 0), and
   the steel scrap has a copper content of 0.18 wt% or less (excluding 0).

10. The hot-rolled steel sheet of claim 8, wherein the pig iron has a tin content of 0.003 wt% or less (excluding 0),

    the direct reduced iron has a tin content of 0.002 wt% or less (excluding 0), and
    the steel scrap has a tin content of 0.018 wt% or less (excluding 0).

11. The hot-rolled steel sheet of claim 8, which satisfies a coating weight of 1.8 to 3.0 g/m$^2$ and a crystal particle size of 2 to 10 $\mu$m when observing the surface after phosphate coating treatment.

12. The hot-rolled steel sheet of claim 8, further comprising one or more elements of chromium (Cr), niobium (Nb), titanium (Ti), and boron (B).

13. An automotive part comprising, in % by weight, 0.07 to 0.12% of carbon, 0.3 to 0.8% of silicon, 1.5 to 2.0% of manganese, 0.02% or less of phosphorus, 0.005% or less of sulfur, 0.12% or less (excluding 0) of copper, 0.012% or less (excluding 0) of tin, and the remainder as iron (Fe) and unavoidable impurities,
    wherein a base material of the automotive part is produced by melting 20 wt% to 60 wt% of blast furnace-based pig iron, 20 wt% to 40 wt% of direct reduced iron, and 20 wt% to 60 wt% of steel scrap.

14. The automotive part of claim 13, wherein the pig iron has a copper content of 0.03 wt% or less (excluding 0),

    the direct reduced iron has a copper content of 0.02 wt% or less (excluding 0), and
    the steel scrap has a copper content of 0.18 wt% or less (excluding 0).

15. The automotive part of claim 13, wherein the pig iron has a tin content of 0.003 wt% or less (excluding 0),

    the direct reduced iron has a tin content of 0.002 wt% or less (excluding 0), and
    the steel scrap has a tin content of 0.018 wt% or less (excluding 0).

16. The automotive part of claim 13, which satisfies a coating weight of 1.8 to 3.0 g/m$^2$ and a crystal particle size of 2 to 10 $\mu$m when observing the surface after phosphate coating treatment.

17. The automotive part of claim 13, wherein the automotive part is an automotive lower arm.

FIG. 1

PRODUCE MOLTEN METAL — S10

PRODUCE SEMI-FINISHED PRODUCT — S20

PRODUCE HOT-ROLLED STEEL SHEET — S30

FIG. 2

S10

| PREPARE PIG IRON | PREPARE DIRECT REDUCED IRON | PREPARE STEEL SCRAP | S11 |

| CHARGE PIG IRON | CHARGE DIRECT REDUCED IRON | CHARGE STEEL SCRAP | S12 |

MELT RAW MATERIALS — S13

FIG. 3

CRACK

[COMPARATIVE EXAMPLE 3]

[EXAMPLE 6]

FIG. 4

[COMPARATIVE EXAMPLE 3]

[EXAMPLE 6]

FIG. 5

[M-1]

[M-2]

[M-3]

[M-4]

[M-5]

FIG. 6

[EXAMPLE 6]

FIG. 7

[COMPARATIVE EXAMPLE 1]

INSUFFICIENT DEPOSITION
AMOUNT

[COMPARATIVE EXAMPLE 3]

BURN-THROUGH

EXAMPLE 6

FIG. 8

EXAMPLE 6

## INTERNATIONAL SEARCH REPORT

| International application No. |
|---|
| **PCT/KR2023/010562** |

| **A.** | **CLASSIFICATION OF SUBJECT MATTER** |
|---|---|

**B21B 1/38**(2006.01)i; **C21D 8/02**(2006.01)i; **B21D 53/88**(2006.01)i; **B21C 47/24**(2006.01)i; **C22C 38/02**(2006.01)i; **C22C 38/04**(2006.01)i; **C22C 38/16**(2006.01)i; **C22C 38/00**(2006.01)i; **B21B 1/22**(2006.01)i

According to International Patent Classification (IPC) or to both national classification and IPC

| **B.** | **FIELDS SEARCHED** |
|---|---|

Minimum documentation searched (classification system followed by classification symbols)

B21B 1/38(2006.01); B21B 1/26(2006.01); B21B 3/00(2006.01); B21B 37/74(2006.01); C21B 13/12(2006.01); C21C 5/52(2006.01); C21D 8/02(2006.01); C22C 38/08(2006.01); C23C 22/00(2006.01); F27B 3/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 용선(molten iron), 직접환원철(direct reduction iron), 철 스크랩(iron scrap), 열연강판(hot-rolled steel sheet), 트램프 원소(tramp element)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-1998-0009493 A (KAWASAKI STEEL CORPORATION) 30 April 1998 (1998-04-30)<br>See paragraphs [0067]-[0071], [0132]-[0147] and [0194]-[0203]. | 1-7 |
| A | | 8-17 |
| Y | JP 10-226812 A (KAWASAKI STEEL CORP.) 25 August 1998 (1998-08-25)<br>See paragraphs [0017] and [0020] and figure 1. | 1-7 |
| Y | KR 10-2016-0126364 A (HYUNDAI STEEL COMPANY) 02 November 2016 (2016-11-02)<br>See paragraphs [0057]-[0062] and figure 1. | 7 |
| A | JP 09-143751 A (SUMITOMO METAL IND LTD.) 03 June 1997 (1997-06-03)<br>See paragraphs [0001] and [0028]-[0047]. | 1-17 |
| A | US 2012-0006156 A1 (DAOU, Rafic Boulos) 12 January 2012 (2012-01-12)<br>See paragraphs [0109]-[0121] and figure 3. | 1-17 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2023** | **17 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/010562**

| Patent document cited in search report | | | Publication date (day/month/year) | Patent family member(s) | | | Publication date (day/month/year) |
|---|---|---|---|---|---|---|---|
| KR | 10-1998-0009493 | A | 30 April 1998 | CN | 1183478 | A | 03 June 1998 |
| | | | | CN | 1183478 | C | 03 June 1998 |
| | | | | EP | 0792942 | A1 | 03 September 1997 |
| | | | | EP | 0792942 | B1 | 03 July 2002 |
| | | | | JP | 09-235650 | A | 09 September 1997 |
| | | | | JP | 10-025540 | A | 27 January 1998 |
| | | | | JP | 10-025541 | A | 27 January 1998 |
| | | | | JP | 3177146 | B2 | 18 June 2001 |
| | | | | JP | 3261043 | B2 | 25 February 2002 |
| | | | | JP | 3266512 | B2 | 18 March 2002 |
| | | | | KR | 10-0280251 | B1 | 01 February 2001 |
| | | | | US | 5853659 | A | 29 December 1998 |
| JP | 10-226812 | A | 25 August 1998 | JP | 3743095 | B2 | 08 February 2006 |
| | | | | WO | 99-54512 | A1 | 28 October 1999 |
| KR | 10-2016-0126364 | A | 02 November 2016 | KR | 10-1675677 | B1 | 11 November 2016 |
| JP | 09-143751 | A | 03 June 1997 | | None | | |
| US | 2012-0006156 | A1 | 12 January 2012 | CN | 102439387 | A | 02 May 2012 |
| | | | | CN | 102439387 | B | 20 January 2016 |
| | | | | EP | 2409101 | A1 | 25 January 2012 |
| | | | | EP | 2409101 | B1 | 18 July 2018 |
| | | | | JP | 2012-520940 | A | 10 September 2012 |
| | | | | JP | 5734946 | B2 | 17 June 2015 |
| | | | | KR | 10-1751075 | B1 | 11 July 2017 |
| | | | | KR | 10-2011-0137366 | A | 22 December 2011 |
| | | | | US | 9453682 | B2 | 27 September 2016 |
| | | | | WO | 2010-106466 | A1 | 23 September 2010 |

Form PCT/ISA/210 (patent family annex) (July 2022)

**EP 4 628 228 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20220165825